# DEMANDE DE BREVET EUROPEEN

(11) **EP 1 142 762 A1**
(43) Date de publication de la demande: **10.10.2001**
(21) Numéro de dépôt: 01400869.2
(22) Date de dépôt: 04.04.2001
(51) Int. Cl.: B60R 16/02

(54) **Fourreau de faisceau électrique, ensemble correspondant, module et porte correspondants**

(30) Priorité: 04.04.2000 FR 0004300
(71) Demandeur: Faurecia Industries, 92100 Boulogne-Billancourt (FR)
(72) Inventeur: Heranney, Yves, 25200 Montbeliard (FR)
(74) Mandataire: Jacobson, Claude

(57) **Abrégé**

Ce fourreau (10) de faisceau électrique pour un faisceau électrique plat d'un module de porte de véhicule automobile est destiné à s'appliquer suivant la forme de la doublure (4) de porte contre celle-ci. Le fourreau (10) comporte au moins deux premières zones à rigidité élevée (63) s'appliquant contre des parties sensiblement droites (30,32,34) de la doublure, reliées par une deuxième zone à rigidité inférieure (62), s'appliquant contre une partie coudée de la doublure, la deuxième zone formant charnière lors du montage du fourreau. La rigidité des premières et seconde zones est suffisante pour que le fourreau garde sensiblement sa forme sous l'effet de son poids propre lorsque sa section est disposée sensiblement verticalement.

## Description

La présente invention concerne un fourreau de faisceau électrique pour un faisceau électrique plat d'un module de porte de véhicule automobile, ce faisceau raccordant des composants électriques du module à un faisceau de caisse correspondant, le fourreau comprenant une gaine et comportant sur une extrémité caisse des moyens de fixation du fourreau sur la caisse et, sur une extrémité porte, des moyens de fixation du fourreau au module, le fourreau étant destiné à s'appliquer suivant la forme de la doublure de porte contre celle-ci.

On connaît dans l'état de la technique, des modules pour porte de véhicule automobile qui comportent des composants électriques, par exemple des moteurs de lève-vitres ou des électro-aimants de verrouillage de la porte.

Chacun des composants comporte des fils électriques individuels pour son alimentation et/ou sa commande. Les fils électriques individuels des différents composants sont liés à une extrémité, parallèlement l'un à l'autre en formant un faisceau électrique plat et souple.

Le faisceau souple est fixé sur la surface du module par exemple par collage. Une partie du faisceau fait saillie vers l'avant du module et porte à son extrémité un connecteur.

Le faisceau s'étend, à l'état monté, entre un emboutissage ménagé dans la doublure intérieure avant de la porte et la surface extérieure du module. Le connecteur du faisceau est connecté à un connecteur complémentaire d'un faisceau électrique de la caisse qui le relie par exemple aux interrupteurs de commande des composants électriques.

Le montage d'un tel module s'effectue de la façon suivante.

Le module est approché au côté intérieur de la porte parallèlement au plan de celle-ci.

Simultanément, le monteur doit veiller à ce que la partie saillante du faisceau souple ne se replie pas vers l'intérieur, c'est-à-dire qu'il fait saillie à l'avant de la doublure frontale lorsque le panneau est appliqué contre la doublure.

On constate que plus la partie saillante du faisceau est longue, plus le risque d'un repli est importante. Le montage d'un tel module est donc compliqué.

L'invention a pour but de pallier cet inconvénient et de faciliter le montage des modules de porte des véhicules automobiles.

A cet effet, l'invention a pour objet un fourreau tel qu'indiqué au début, caractérisé en ce qu'il comporte au moins deux premières zones à rigidité élevée s'appliquant contre des parties sensiblement droites de la doublure à l'état monté, reliées par une seconde zone à rigidité inférieure, s'appliquant contre une partie coudée de la doublure à l'état monté, la seconde zone formant charnière lors du montage du fourreau sur la doublure de porte, et en ce que la rigidité des premières et seconde zones est suffisante pour que le fourreau garde sensiblement sa forme sous l'effet de son poids propre lorsque sa section est disposée sensiblement verticalement.

Suivant des modes particuliers de réalisation, l'invention peut comporter l'une ou plusieurs des caractéristiques suivantes:
- la seconde zone comprend des gorges ménagées dans la surface extérieure du fourreau transversalement par rapport à l'axe longitudinal de celui-ci,
- la gaine est en matière élastomère,
- il comprend une plaque de maintien provisoire en matière rigide, de préférence en matière plastique rigide, fixée sur le côté large de la gaine, tournée vers la doublure à l'état monté, et ladite seconde zone comprend des gorges ménagées transversalement dans la plaque,
- les gorges de la plaque se trouvent en regard des gorges de la gaine,
- il comporte une première lèvre d'étanchéité qui s'applique sur la surface frontale du module à l'état monté, ladite première lèvre d'étanchéité s'étendant autour de la surface de trois côtés du fourreau, le côté restant du fourreau étant le côté large s'appliquant contre la doublure de porte à l'état monté,
- il comporte une deuxième lèvre d'étanchéité disposée sur la surface extérieure du fourreau près de l'extrémité caisse, ladite deuxième lèvre d'étanchéité étant sensiblement en forme de cuvette s'ouvrant vers l'extrémité caisse, et les moyens de fixation du fourreau sur la caisse sont des moyens de fixation qui pressent ladite deuxième lèvre d'étanchéité contre la caisse,
- les moyens de fixation du fourreau sur la caisse comportent au moins un organe de fixation coopérant par complémentarité de formes, notamment par encliquetage, avec la caisse, et cet organe est en un matériau plus rigide que le matériau de base du fourreau, de préférence en un matériau thermoplastique.
- l'extrémité caisse du fourreau est surmoulée autour d'au moins une partie de l'organe de fixation,
- le fourreau comporte en outre des moyens de liaison du fourreau sur la doublure de la porte,
- les moyens de liaison comprennent des tétons disposés sur le côté large du fourreau et réalisés d'un seul tenant avec le fourreau,
- les moyens de liaison du fourreau sur la doublure comprennent un étrier, de préférence fixé sur le fourreau, et s'étendant autour du côté du fourreau opposé à la doublure, et l'étrier comporte au moins un organe coopérant par encliquetage avec la doublure et dirigé vers la doublure,
- le fourreau comporte sur son extrémité porte une languette faisant saillie dans le sens de l'ouverture du fourreau, et la languette comporte sur sa surface extérieure au moins un téton d'immobilisation du faisceau par rapport au fourreau, téton qui est disposé latéralement par rapport au faisceau, le téton venant de préférence de matière avec le fourreau.

L'invention a également pour objet un ensemble d'un fourreau précité et d'un faisceau électrique plat, dans lequel le faisceau électrique comporte au moins une saillie latérale comportant un trou qui coopère avec un téton d'immobilisation.

En outre, l'invention a pour objet un module pour porte de véhicule automobile, comportant un fourreau du type précité ou comportant un ensemble du type précité.

L'extrémité porte du fourreau peut en particulier être reçue dans un évidement du module, dont la profondeur est sensiblement la même que l'épaisseur du fourreau.

L'invention a également pour objet une porte de véhicule automobile, comportant un fourreau du type précité.

L'invention sera mieux comprise à la lecture de la description qui va suivre, donnée uniquement à titre d'exemple et faite en se référant aux dessins annexés, sur lesquels :
- la Fig.1 est une vue de côté d'un ensemble de fourreau de faisceau électrique selon l'invention à l'état monté ;
- la Fig.2 est une vue en coupe selon la ligne II-II de la Fig.1;
- la Fig.3 est une vue en perspective d'un étrier de fixation ;
- la Fig.4 est une vue en coupe selon la ligne IV-IV de la Fig.1 ;
- la Fig.5 est une vue en coupe d'une variante de réalisation de l'invention a l'état non monté ; et
- la Fig.6 est une vue de côté d'un deuxième mode de réalisation de l'invention qui correspond à la vue de la Fig.1 avec une partie en coupe.

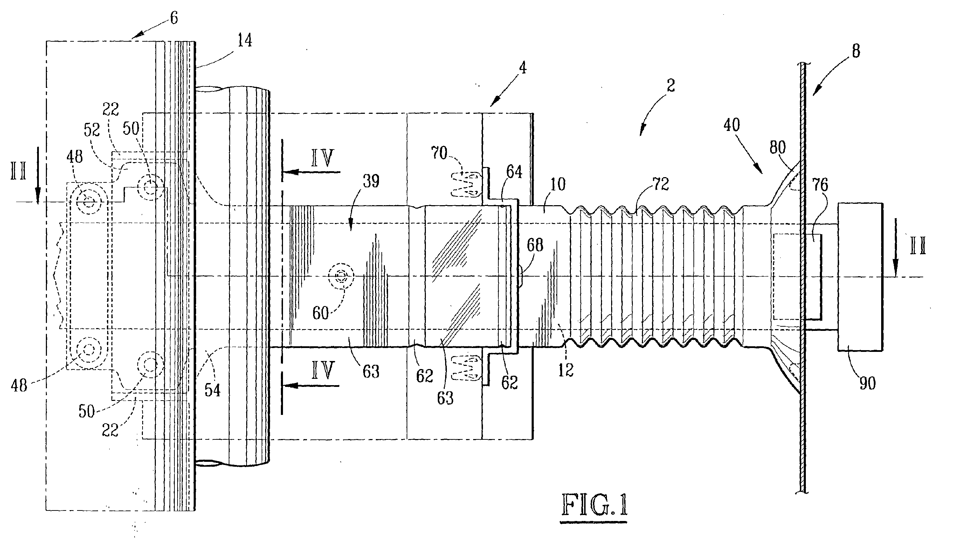

Sur la figure 1 est représenté un détail d'une porte de véhicule automobile, représentant un ensemble 2 de fourreau de faisceau électrique selon l'invention.

Les expressions avant , arrière, extérieure et intérieure seront utilisées dans ce qui suit par rapport au véhicule lorsque la porte est fermée.

On voit sur la figure 1 une partie de la doublure latérale avant 4 de la porte, une partie d'un module de porte 6 fixé sur la partie intérieure de la porte, et une partie de la caisse de véhicule 8, ainsi qu'un ensemble d'un fourreau 10 et d'un faisceau électrique 12 en forme de ruban plat.

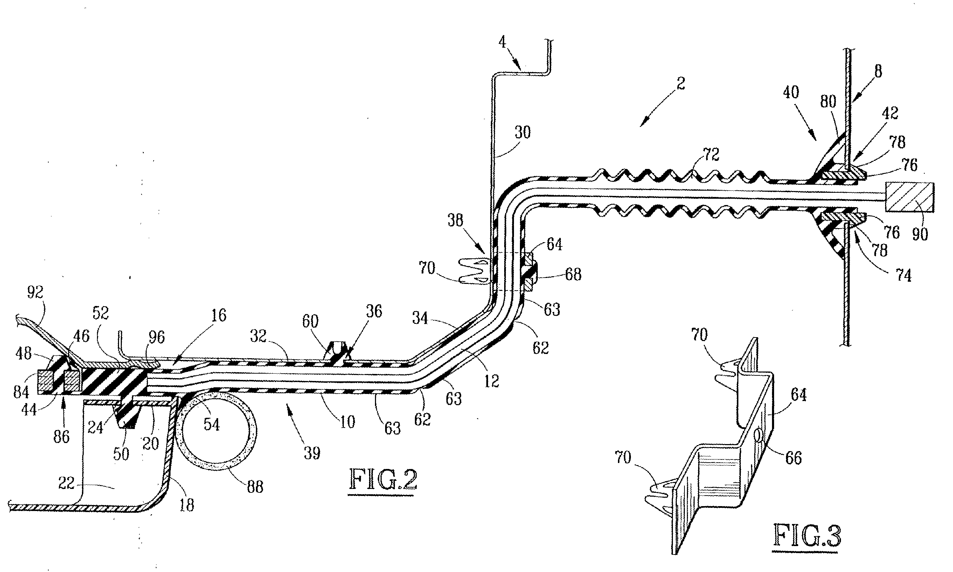

Le module de porte 6 comporte le panneau intérieur de porte 14 et est fixé de façon classique sur la partie intérieure de la porte. Le module 6 recouvre une partie de la doublure latérale 4 qui est dirigée vers l'intérieur du véhicule lorsque la porte est fermée (Fig.2). Le module de porte 6 comporte un évidement 16 ménagé dans sa paroi avant 18 qui sert en tant que passage pour le fourreau 10.

Cet évidement de passage 16 a une forme complémentaire en coupe transversale à celle du fourreau 10.

A l'emplacement de l'évidement de passage 16, une languette de fixation 20 fait saillie vers l'arrière à partir de la paroi avant 18 du module, et parallèlement à la porte. Cette languette 20 est renforcée par deux nervures 22. Deux trous de fixation de fourreau 24 sont ménagés dans cette languette 20.

La doublure 4 de la porte comporte une paroi avant 30 de doublure s'étendant sensiblement verticalement et perpendiculairement au plan de la porte. La doublure 4 comporte en outre une paroi intérieure 32 de doublure qui s'étend sensiblement parallèlement au plan de la porte.

Les deux parois de doublure sont reliées l'une à l'autre par une paroi de doublure intermédiaire qui 34 s'étend suivant un angle de 45° par rapport aux deux parois 30,32 de doublures précitées.

La paroi intérieure 32 comporte un premier trou de fixation 36 de fourreau, et la paroi avant 30 comporte deux deuxièmes trous de fixation 38.

Le fourreau de faisceau électrique 10 en caoutchouc ou autre matière élastomère s'étend depuis l'espace formé par le module 6 et la porte, à travers l'évidement de passage 16, horizontalement vers l'avant. Sa section transversale, de forme générale rectangulaire aplatie, est disposée sensiblement verticalement. Le fourreau comprend une gaine 39 entourant le faisceau électrique 12.

Le fourreau 10 s'applique sur la partie avant de la paroi intérieure 32, sur la paroi de doublure intermédiaire 34 ainsi que sur la partie intérieure de la paroi avant 30. A cet emplacement, il est coudé de 90° et s'étend à partir de là parallèlement à la porte vers l'avant. L'extrémité avant 40 du fourreau est fixée sur un évidement 42 ménagé dans la caisse 8 du véhicule.

Une saillie 44 venue de matière avec le fourreau 10 s'étend vers l'arrière à partir du bord arrière 46 de celui-ci. Cette saillie 44 comporte deux tétons d'immobilisation 48 sur sa surface extérieure pour l'immobilisation du faisceau électrique 12.

Le fourreau 10 est fixé sur le module de porte 6 par deux tétons 50 se trouvant sur la surface intérieure d'une bride de raccordement 52 du fourreau. Ils sont venus de matière avec celui-ci et coopèrent avec les trous de fixation 24 du module.

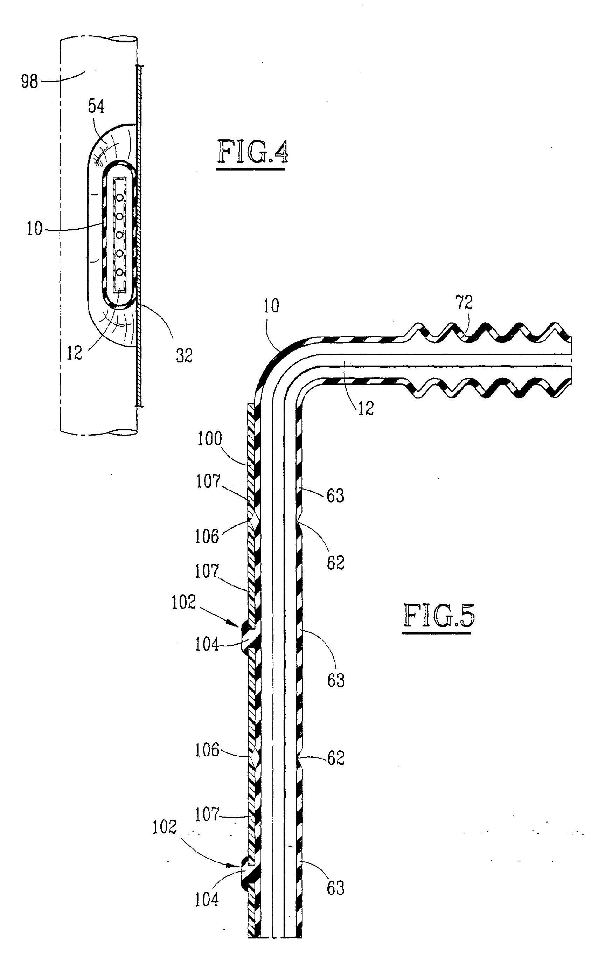

Le fourreau 10 comporte en outre une lèvre d'étanchéité 54 qui s'applique à l'état monté contre la paroi avant 18 du module. Cette lèvre 54 s'étend à partir de trois côtés du fourreau 10, le côté extérieur, c'est-à-dire le côté qui est tourné vers la paroi intérieure 32 de la doublure, ne comportant pas de lèvre (voir Fig.4).

Un téton de fixation 60 analogue aux tétons de fixation 50 au module, est disposé sur la surface extérieure du fourreau 10 et coopère avec le trou de fixation 36 de la paroi intérieure 32.

Le fourreau 10 comporte en outre deux gorges 62 ménagées dans sa surface extérieure et faisant tout le tour du fourreau. Les gorges 62 présentent une rigidité en flexion inférieure par rapport aux parties adjacentes à rigidité élevée 63 du fourreau 10,et elles forment des charnières à film lors du montage.

La partie du fourreau 10 qui s'applique contre la paroi avant 30 est fixée contre celle-ci par un étrier de fixation 64, en matière plastique représenté sur la figure 3. Cet étrier comporte un trou de liaison 66 qui coopère avec une saillie 68 du fourreau en forme de T. Il comporte en outre des nez d'encliquetage 70 coopérant avec les trous de fixation 38 de la paroi avant 30.

La partie du fourreau 10 qui s'étend entre la paroi avant 30 et la caisse 8 comporte une partie formant soufflet 72, afin de permettre au fourreau 10 de fléchir lors de l'ouverture et de la fermeture de la porte. Le fourreau 10 est fixé sur la caisse 8 par des moyens d'encliquetage 74. Ces moyens 74 comportent deux plaques 76, de préférence en matière thermoplastique, qui comportent une section en forme de crochet 78. L'extrémité caisse 40 du fourreau est surmoulée autour des plaques 76 de façon telle que les crochets 78 fassent saillie sur le bord avant du fourreau 10.

Une lèvre d'étanchéité 80 s'étend autour de l'extrémité caisse 40 du fourreau et s'applique contre la tôle de la caisse 8. Cette lèvre 80 est pressée par les crochets 78.

Le faisceau électrique 12 est disposé à l'intérieur du fourreau 10. Une bride d'immobilisation 84 fait saillie latéralement du faisceau 12. Deux trous 86 ménagés dans cette bride 84 coopèrent avec les tétons d'immobilisation 48 du fourreau.

Il est à noter que le faisceau 12 est librement mobile par rapport au fourreau 10 sur tout le reste de la longueur de ce dernier.

Le faisceau 12 comporte un connecteur 90 sur son extrémité caisse. A l'état monté, ce connecteur 90 est connecté à un connecteur complémentaire de caisse (non représenté).

Une feuille d'étanchéité 92 est disposée entre le module 6 et la doublure de porte 4 et s'étend entre le fourreau 10 et la doublure 4. Le bord 96 de la feuille d'étanchéité est ondulé afin d'augmenter l'effet d'étanchéité par serrage entre deux surfaces.

Un joint d'étanchéité 98 du cadre de la porte s'applique, en position fermée de cette dernière, contre le côté long de la lèvre d'étanchéité 54 du fourreau.

Le montage du faisceau et du fourreau s'effectue de la façon suivante.

En premier, on enfile le faisceau électrique 12 dans le fourreau 10 à partir du côté porte de celui-ci. Puis on fixe le connecteur 90 sur l'extrémité caisse du faisceau électrique 12 qui fait saillie du fourreau 10. Ensuite, on enfiche les trous 86 de la bride d'immobilisation 84 du faisceau sur les tétons d'immobilisation 48 du fourreau.

Ensuite, on fixe l'extrémité porte du fourreau 10 sur le module 6 par enfichement des tétons de fixation 50 dans les trous de fixation 24 du module, et on connecte les composants électriques aux fils individuels du faisceau.

Le côté extérieur du module 6 est ensuite recouvert par la feuille d'étanchéité 92, qui est collée sur le bord du module et au-dessus de la surface extérieure du fourreau 10 de façon classique.

Ensuite, on monte le module 6 sur le côté intérieur de la porte, tout d'abord par un positionnement parallèlement au plan général de la porte et ensuite par un mouvement perpendiculairement au plan de la porte, jusqu'à ce que le module 6 et le fourreau 10 s'appliquent contre la paroi latérale intérieure de la doublure 4. Grâce à la rigidité de la partie libre du fourreau 10, le fourreau 10 conserve sensiblement sa forme initiale pendant la manipulation, au moins lorsque le module 6 est positionné verticalement. En conséquence, le danger de repliage du fourreau vers l'intérieur est fortement diminué pendant la manipulation et le montage est plus facile.

Le fourreau 10 est fixé sur la paroi intérieure de doublure par l'enfoncement du téton de fixation 60 dans le trou de fixation 36 correspondant de la doublure 4.

La partie médiane du fourreau 10 est ensuite appliquée contre la paroi de doublure intermédiaire 34 et contre la paroi avant 30. Le fourreau est fixé sur cette dernière par encliquetage de l'étrier de fixation 64. Ces opérations de montage sont faciles grâce aux charnières à film 62 ménagées dans le fourreau 10.

Finalement, l'extrémité caisse 40 du fourreau est fixée sur la tôle de la caisse 8 par l'encliquetage des crochets 76 dans l'évidement 42 de la caisse.

Le fait que les deux plaques à crochet 76 ne sont reliées que par de la matière élastomère facilite la déformation de l'extrémité 40 de fourreau pendant cette opération.

De plus, étant donné que l'extrémité du fourreau 40 ne fléchit pratiquement pas vers le bas elle se trouve sensiblement à la hauteur de l'évidement de la caisse.

Le connecteur du faisceau 90 peut maintenant être connecté au connecteur complémentaire de la caisse.

Le fourreau 10 selon l'invention permet un montage frontal aisé du module 6 sur la doublure 4.

De plus, étant donné que le fourreau 10 reste de lui-même dans une position déterminée, le stockage du module est facile.

La fixation du fourreau 10 par des tétons venus de matière est facile et bon marché.

Sur la Fig.5, on voit un détail d'une variante du fourreau 10 selon l'invention.

Ce détail représente la partie du fourreau 10 qui est destinée à s'appliquer contre la paroi intérieure 32 de doublure , la paroi de doublure intermédiaire 34 et la paroi de doublure avant 30 ainsi qu'une partie du soufflet 72, à l'état non monté.

Une plaque de renforcement 100 est disposée sur le coté extérieur du fourreau 10, qui est le côté tourné vers la doublure 4 à l'état monté. Cette plaque 100 est fabriquée en matière plastique rigide, par exemple du polyéthylène.

La plaque 100 est fixée sur le fourreau 10 par deux trous 102 ménagés dans la plaque, qui coopèrent avec deux saillies 104 en T, de façon analogue à la fixation de l'étrier de fixation 64 de la figure 3 sur le fourreau.

En outre, la plaque 100 comporte deux gorges 106 formant charnières à film, sur sa surface intérieure, qui s'appliquent contre le fourreau 10. Ils séparent trois zones à rigidité élevée 107 de la plaque. Les gorges 106 se trouvent vis à vis des gorges 62 du fourreau.

Lors du montage du module, cette plaque 100 maintient droite la partie correspondante du fourreau 10 et lors de l'application du fourreau 10 contre la doublure 4, le monteur plie les parties individuelles de la plaque 100 afin qu'elles s'appliquent contre la doublure 4. La rigidité des parties du fourreau renforcées est ainsi encore augmentée et le danger de repliage pendant le montage diminué.

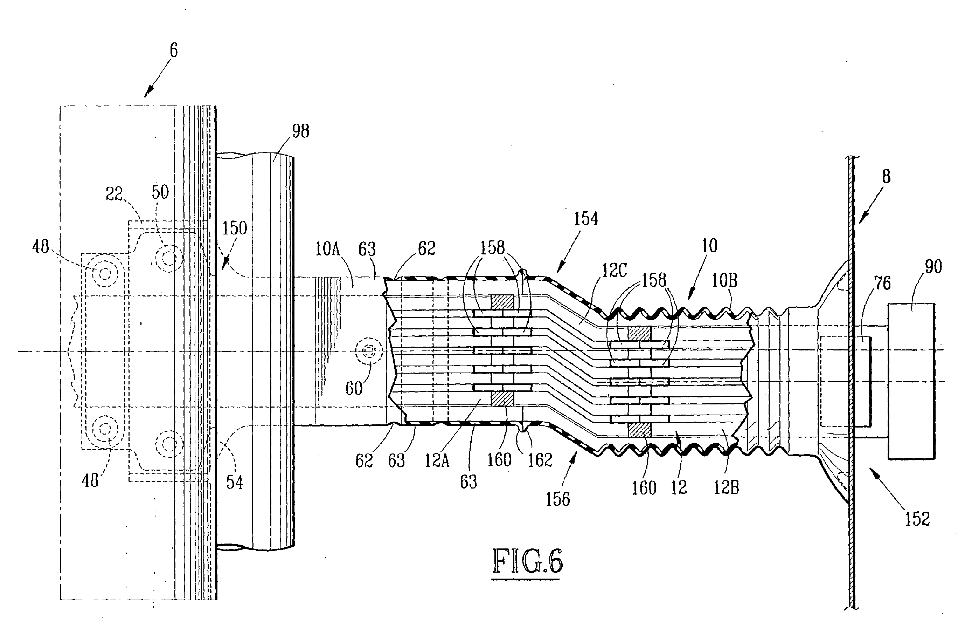

Sur la figure 6, on a représenté un deuxième mode de réalisation du fourreau selon l'invention.

Cette figure correspond à la figure 1, avec une partie en coupe. Dans ce qui suit, seulement les différences par rapport au premier mode de réalisation seront décrites.

Afin de tenir compte d'un décalage vertical entre la sortie 150 du faisceau de la porte et l'emplacement de connexion 152 du faisceau sur la caisse 8, le faisceau 12 et le fourreau 10 présentent des parties coudées 154,156.

Le faisceau électrique 12 est fabriqué en trois parties, deux parties droites 12A,12B et une partie coudée deux fois 12C. Les fils électriques 158 font saillie des extrémités de ces parties, et butent les uns contre les autres. Chacune des parties droites du faisceau 12A,12B est connectée à l'extrémité associée de la partie coudée 12C par une pince de contact 160.

Le fourreau 10 de faisceau est constitué de deux parties 10A, 10B comportant chacune une bride de liaison 162. Les deux parties sont reliées par soudage des brides.

Le montage du fourreau est effectué de la façon suivante.

Tout d'abord, on connecte la partie coudée 12C du faisceau à la partie caisse 12B de faisceau au moyen de la pince de contact correspondante 160. Ensuite, on enfile cet ensemble dans la partie caisse 10B du fourreau, qui a de façon correspondante une forme coudée dans son plan.

Puis on enfile la partie porte 12A du faisceau dans la partie correspondante 10A du fourreau et on l'immobilise par l'enfichage des tétons d'immobilisation 48 dans les trous 86 de la bride d'immobilisation.

Enfin, on raccorde les deux parties du faisceau 12A, 12C par une deuxième pince de connexion 160 et on relie les deux parties du fourreau 10A, 10B par soudage des brides 162.

Le montage de l'ensemble fourreau/faisceau est analogue au montage du premier mode de réalisation.

## Revendications

1. Fourreau de faisceau électrique pour un faisceau électrique plat d'un module (6) de porte de véhicule automobile, ce faisceau (12) raccordant des composants électriques du module (6) à un faisceau de caisse correspondant, le fourreau (10) comprenant une gaine (39) et comportant sur une extrémité caisse (40) des moyens de fixation (74) du fourreau (10) sur la caisse (8) et, sur une extrémité porte, des moyens de fixation du fourreau (10) au module, le fourreau (10) étant destiné à s'appliquer suivant la forme de la doublure (4) de porte contre celle-ci, **caractérisé en ce qu'**il comporte au moins deux premières zones à rigidité élevée (63 ; 63, 107) s'appliquant contre des parties sensiblement droites (30,32,34) de la doublure (4) à l'état monté, reliées par une seconde zone à rigidité inférieure (62 ;62,106), s'appliquant contre une partie coudée de la doublure (4) à l'état monté, la seconde zone (62 ;62,106) formant charnière lors du montage du fourreau (10) sur la doublure (4) de porte, et **en ce que** la rigidité des premières et seconde zones est suffisante pour que le fourreau (10) garde sensiblement sa forme sous l'effet de son poids propre lorsque sa section est disposée sensiblement verticalement.

2. Fourreau selon la revendication 1, **caractérisé en ce que** ladite seconde zone comprend des gorges (62) ménagées dans la surface extérieure du fourreau (10) transversalement par rapport à l'axe longitudinal de celui-ci.

3. Fourreau selon la revendication 1 ou la revendication 2, **caractérisé en ce que** la gaine (39) est en matière élastomère.

4. Fourreau selon la revendication 3, **caractérisé en ce qu'**il comprend une plaque (100) de maintien provisoire en matière rigide, de préférence en matière plastique rigide, fixée sur le côté large de la gaine (39), tournée vers la doublure à l'état monté, et **en ce que** ladite seconde zone comprend des gorges (106) ménagées transversalement dans la plaque (100).

5. Fourreau selon la revendication 4, **caractérisé en ce que** les gorges (106) de la plaque (100) se trouvent en regard des gorges de la gaine (39).

6. Fourreau selon l'une quelconque des revendications précédentes, **caractérisé en ce qu'**il comporte une première lèvre d'étanchéité (54) qui s'applique sur la surface frontale (18) du module à l'état monté, ladite première lèvre d'étanchéité (54) s'étendant autour de la surface de trois côtés du fourreau (10), le côté restant du fourreau étant le côté large s'appliquant contre la doublure (4) de porte à l'état monté.

7. Fourreau selon l'une quelconque des revendications précédentes, **caractérisé en ce qu'**il comporte une deuxième lèvre d'étanchéité (80) disposée sur la surface extérieure du fourreau (10) près de l'extrémité caisse (40), ladite deuxième lèvre d'étanchéité (80) étant sensiblement en forme de cuvette s'ouvrant vers l'extrémité caisse, et **en ce que** les moyens de fixation (74) du fourreau sur la caisse sont des moyens de fixation qui pressent ladite deuxième lèvre d'étanchéité (80) contre la caisse (8).

8. Fourreau selon l'une quelconque des revendications précédentes, **caractérisé en ce que** les moyens de fixation (74) du fourreau sur la caisse comportent au moins un organe de fixation (78) coopérant par complémentarité de formes, notamment par encliquetage, avec la caisse, et **en ce que** cet organe (78) est en un matériau plus rigide que le matériau de base du fourreau (10), de préférence en un matériau thermoplastique.

9. Fourreau selon la revendication 8, **caractérisé en ce que** l'extrémité caisse (40) du fourreau est surmoulée autour d'au moins une partie de l'organe de fixation (78).

10. Fourreau selon l'une quelconque des revendications précédentes, **caractérisé en ce que** le fourreau (10) comporte en outre des moyens de liaison (60,64) du fourreau sur la doublure (4) de la porte.

11. Fourreau selon la revendication 10, **caractérisé en ce que** les moyens de liaison comprennent des tétons (60) disposés sur le côté large du fourreau (10) et réalisés d'un seul tenant avec le fourreau (10).

12. Fourreau selon la revendication 10, **caractérisé en ce que** les moyens de liaison du fourreau sur la doublure comprennent un étrier (64), de préférence fixé sur le fourreau, et s'étendant autour du côté du fourreau (10) opposé à la doublure (4), et **en ce que** l'étrier (64) comporte au moins un organe (70) coopérant par encliquetage avec la doublure (4) et dirigé vers la doublure (4).

13. Fourreau selon l'une quelconque des revendications précédentes, **caractérisé en ce que** le fourreau (10) comporte sur son extrémité porte une languette (44) faisant saillie dans le sens de l'ouverture du fourreau (10), et **en ce que** la languette (44) comporte sur sa surface extérieure au moins un téton d'immobilisation (48) du faisceau par rapport au fourreau, téton (48) qui est disposé latéralement par rapport au faisceau, le téton (48) venant de préférence de matière avec le fourreau (10).

14. Ensemble d'un fourreau selon la revendication 13 et d'un faisceau électrique plat, **caractérisé en ce que** le faisceau (12) électrique comporte au moins une saillie latérale (84) comportant un trou (86) qui coopère avec un téton d'immobilisation (48).

15. Module pour porte de véhicule automobile comportant un fourreau selon l'une quelconque des revendications 1 à 13 ou un ensemble selon la revendication 14.

16. Module selon la revendication 15, **caractérisé en ce que** l'extrémité porte du fourreau (10) est reçue dans un évidement (16) du module, dont la profondeur est sensiblement la même que l'épaisseur du fourreau (10).

17. Porte de véhicule automobile comportant un fourreau (10) selon l'une quelconque des revendications 1 à 13.
